# EUROPÄISCHE PATENTSCHRIFT

(11) **EP 2 587 082 B1**
(45) Veröffentlichungstag und Bekanntmachung des Hinweises auf die Patenterteilung: **25.12.2013**
(21) Anmeldenummer: 11187168.7
(22) Anmeldetag: 28.10.2011
(51) Int. Cl.: F16C 41/00, F16C 19/54, B08B 5/02, B05B 7/24, B05B 3/06, B05B 1/28, B08B 3/02, B05B 1/26, B05B 3/04

(54) **Spritzdüsenbaugruppe für pressluftbetriebene Reinigungsgeräte**
Injection nozzle component for compressed air-operated cleaning devices
Composant de buse de pulvérisation pour appareils de nettoyage fonctionnant à air comprimé

(43) Veröffentlichungstag der Anmeldung: 01.05.2013
(73) Patentinhaber: Bendel Werkzeuge Inhaber Frank Bendel, 29549 Bad Bevensen (DE)
(72) Erfinder: Bosua, Christopher John, Davenport Florida 33897 (US)
(74) Vertreter: Knoop, Philipp

(56) Entgegenhaltungen:
- EP-A1- 2 221 110
- EP-A1- 2 255 885
- DE-U1-202011 051 147

## Beschreibung

Die Erfindung betrifft eine Spritzdüsenbaugruppe für pressluftbetriebene Reinigungsgeräte, mit einem Düsengehäuse, das einen im Wesentlichen rohrförmigen Gehäuseabschnitt aufweist, der ein am Reinigungsgerät zu befestigendes Eintrittsende mit einer Eintrittsöffnung aufweist und auf seiner dem Eintrittsende entgegengesetzten Seite in einen, vorzugsweise trichterförmig erweiterten Ausblasabschnitt mit einer Austrittsöffnung übergeht, wobei im Innenraum des rohrförmigen Gehäuseabschnitts ein eintrittseitiges Lager und ein austrittseitiges Lager im axialen Abstand zueinander angeordnet sind, mit denen ein Düsenrohr drehbar gelagert ist, welches ein im Bereich der Eintrittsöffnung des Düsengehäuses angeordnetes Eintrittsende zum Eintritt von unter Druck stehendem Fluid, insbesondere von Pressluft oder einem Gemisch aus Pressluft und Flüssigkeitströpfchen, aufweist, wobei sich ein Hauptabschnitt des Düsenrohrs von dem Eintrittsende ausgehend im wesentlichen gerade durch die Lager hindurch erstreckt, an den sich im Bereich des Ausblasabschnitts des Düsengehäuses ein gegenüber der Drehachse des Düsenrohrs abgewinkelter Übergangsabschnitt anschließt, der seinerseits in einen Düsenabschnitt übergeht, dessen freies Ende eine Düsenöffnung zum Austritt des Fluids aufweist, wobei das Düsenrohr im Bereich seines Eintrittsendes mit einem Anschlagteil versehen ist, welches einen im Wesentlichen scheibenringförmigen, sich radial nach außen erstreckenden Scheibenabschnitt aufweist.

Eine derartige Spritzdüsenbaugruppe ist aus der EP 2 255 885 A1 oder der DE 20 2011 051 147 U1 bekannt. Sie wird verwendet bei pressluftbetriebenen Reinigungsgeräten, die auch als Reinigungspistolen, Spritzpistolen oder Sprühpistolen bezeichnet werden. Solche Reinigungsgeräte haben einen pistolenförmigen Handgriff, an dessen unterem Ende eine Pressluftleitung angeschlossen wird. Die Pressluft kann über ein Ventil, welches mittels eines Betätigungshebels geöffnet wird, aus dem oberen Ende des Handgriffs in ein im Wesentlichen rohrförmiges Zwischenstück eintreten, welches üblicherweise mit einem Vorratsbehälter für Reinigungsflüssigkeit, insbesondere Wasser, verbunden ist. Eine Flüssigkeitsleitung verbindet den Vorratsbehälter mit dem Zwischenstück. Die mit hoher Geschwindigkeit vorbeistreichende Pressluft reißt aufgrund des Venturieffektes kleine Flüssigkeitströpfchen mit sich, so dass ein nebelartiges Pressluft-Reinigungsflüssigkeits-Gemisch entsteht. Dieses Gemisch gelangt nun in eine an dem Zwischenstück zu befestigende Spritzdüsenbaugruppe, wo es in ein Düsenrohr eintritt, dessen Austrittsende eine gegenüber einer Drehachse exzentrisch angeordnete Düsenöffnung aufweist. Durch den exzentrischen Austritt des Reinigungsfluids wird das Düsenrohr mit der Düsenöffnung in schnelle Drehungen versetzt, so dass das Reinigungsfluid stark verwirbelt wird und aus einer Austrittsöffnung der Spritzdüsenbaugruppe in Form eines Wirbels austritt. Aufgrund der Verwirbelung des Reinigungsfluids kann dieses an Schmutzteilchen, die an dem zu reinigenden Gegenstand anhaften, besonders wirkungsvoll angreifen und diese lösen.

Wenn im Folgenden von Fluid die Rede ist, soll dieser Ausdruck sowohl Pressluft, als auch Flüssigkeiten aller Art und Pressluftflüssigkeitsgemische in Nebelform umfassen, wobei auch kleine Festkörper enthalten sein können. Wesentlich ist, dass das Fluid schraubenförmig oder spiralförmig verwirbelt aus der Spritzdüsenbaugruppe austritt und für Reinigungszwecke geeignet ist.

Aufgabe der Erfindung ist es, eine Spritzdüsenbaugruppe der eingangs genannten Art zu verbessern, so dass ihre Funktionsfähigkeit in optimaler Weise und über eine lange Lebensdauer gewährleistet ist.

Diese Aufgabe wird erfindungsgemäß durch die kennzeichnenden Merkmale des Anspruchs 1 gelöst. Der Innenring des eintrittsseitigen Lagers dreht sich zusammen mit dem anliegenden Rohrabschnitt des Anschlagteils und mit dem Düsenrohr. Über den Rohrabschnitt wird die auf den Scheibenabschnitt des Anschlagteils wirkende von der auftreffenden Pressluft erzeugte Axialkraft übertragen. Die Erfindung hat den Vorteil, dass das Fluid nicht nur durch das Düsenrohr hindurch tritt, um an der Austrittsöffnung verwirbelt auszutreten, sondern auch durch den Ringspalt zunächst zum eintrittseitigen Lager und dann zum austrittsseitigen Lager gelangt und durch die Lager hindurchströmt. Dabei wird Staub und Schmutz, der in die Lager gelangt ist, entfernt und somit die Lebensdauer und Funktion der Lager verbessert. Dies trifft auch nicht nur auf eine Ausführungsform gemäß dem weiter hinten beschriebenen Ausführungsbeispiel zu, welches zwei Lager aufweist. Vielmehr ist die Erfindung auch auf Spritzdüsenbaugruppen anwendbar, die drei oder mehr Lager aufweisen.

Eine bevorzugte Ausgestaltungsform der Erfindung sieht vor, dass der Ringspalt eine Spaltbreite von ca. 2 mm aufweist. Die Spaltbreite muss natürlich auf den Querschnitt der Bohrung des Düsenrohrs abgestimmt sein, damit genügend Pressluft durch das Düsenrohr gepresst wird, um es in Drehungen zu versetzen und die gewünschte Reinigungswirkung zu erzielen. Bei den hier vorliegenden Abmessungen hat sich eine Spaltbreite von 2 mm als optimal erwiesen.

Für die Gewährleistung einer bestmöglichen Funktion über einen längstmöglichen Zeitraum spielt auch die Fläche des Scheibenabschnitts eine wichtige Rolle, denn von der Größe der druckbeaufschlagten Fläche hängt es ab, mit welcher Kraft der Scheibenabschnitt gegen das eintrittseitige Lager gedrückt wird. Im Zusammenhang mit der vorliegenden Erfindung hat es sich daher als optimal erwiesen, wenn der Außendurchmesser des Scheibenabschnitts etwa 16 mm beträgt.

In einer einfachen Ausgestaltung der Erfindung ist das Düsenrohr im Bereich seines Eintrittsendes mit einem Außengewinde, vorzugsweise mit Gewindegröße M5, versehen, auf welches das mit einem Innengewinde versehene Anschlagteil aufgeschraubt ist. Hierdurch kann das Anschlagteil auf einfache Weise am Düsenrohr befestigt werden.

Ebenso kann das Düsengehäuse an seinem Eintrittsende mit einem Innengewinde zur Befestigung an dem Reinigungsgerät versehen sein, vorzugsweise mit einem M18-Gewinde. Durch das Aufschrauben der Spritzdüsengruppe auf das Reinigungsgerät ist die Befestigung ganz einfach auszuführen. Sollte das Reinigungsgerät mit einem kleineren Gewinde versehen sein, kann die erfindungsgemäße Spritzdüsenbaugruppe mittels eines Adapters dennoch befestigt werden oder man passt das Innengewinde des Düsengehäuses an das Außengewinde des Reinigungsgerätes an.

In Ausgestaltung der Erfindung liegen die beiden Lager und etwa vorhandene weitere Lager des Düsenrohrs mit der Umfangsfläche ihrer radial außen liegenden Außenringe an einer zylindrischen Innenwand des rohrförmigen Gehäuseabschnitts des Düsengehäuses an. Bei dieser Anordnung kann man die Lager auf dem Düsenrohr vormontieren und die vormontierte Düsenrohreinheit in das Düsengehäuse einführen, wobei die Lager mit ihren Außenringen an der zylindrischen Innenwand entlanggeschoben werden können, bis das Düsenrohr und die Lager ihre endgültige Einbauposition erreichen. Weitere Befestigungsmaßnahmen sind nicht erforderlich, um die Lager radial festzuhalten.

Um die Lager auch in axialer Richtung zu fixieren, sieht eine Weiterbildung der Erfindung vor, dass das austrittsseitige Lager in Axialrichtung an einem von der Innenwand des Düsengehäuses radial nach innen ragenden, axialen Anschlag des Düsengehäuses anliegt, dass zwischen dem eintrittseitigen Lager und dem austrittseitigen Lager ein Abstandhalter angeordnet ist, der das Düsenrohr umschließt, und dass das Anschlagteil durch das unter Druck stehende Fluid in Axialrichtung gegen das eintrittsseitige Lager drückt, wobei die Andruckkraft über den Abstandhalter und das austrittsseitige Lager am axialen Anschlag des Düsengehäuses abgestützt wird. Ein derartiger axialer Anschlag des Düsengehäuses kann auf einfache Weise bei der Fertigung des Düsengehäuses mit eingeformt werden und erfordert daher keinen zusätzlichen Arbeitsschritt.

Wenn das Anschlagteil zusätzlich mit Finnen versehen ist, die auf der der Eintrittsöffnung des Düsengehäuses zugewandten Seite des Scheibenabschnitts im Fluidstrom angeordnet sind, kann die Drehgeschwindigkeit des Düsenrohrs modifiziert und an die Erfordernisse optimal angepasst werden.

In einer bevorzugten Weiterbildung der Erfindung weisen die Finnen auf dem Scheibenabschnitt in Drehrichtung gleiche Winkelabstände zueinander auf. Des Weiteren sind die Finnen vorzugsweise in Radialrichtung spiralförmig ausgestaltet. Bei dieser Ausführungsform hat der Scheibenabschnitt zusammen mit den Finnen die Funktion einer kleinen Turbine, die sich im Fluidstrom mit einer gut kontrollierbaren und relativ konstant zu haltenen Geschwindigkeit dreht.

Wegen der baulichen Gegebenheiten hat der Fluidstrom im Bereich der Finnen eine radiale und eine axiale Geschwindigkeitskomponente. Es wird daher eine Ausführungsform empfohlen, bei der die Ausdehnung der Finnen in Axialrichtung mit zunehmendem Abstand von der Drehachse zunimmt.

Um die gewünschte Verwirbelung zu erzeugen, muss das Düsenrohr einen exzentrisch abgebogenen Abschnitt aufweisen. Die Biegung kann unter verschiedenen Winkel erfolgen, von denen die Qualität der Wirbelerzeugung einerseits und eine durch Unwucht des Düsenrohrs erzeugte Vibration der gesamten Düsenbaugruppe und damit auch des Reinigungsgerätes andererseits abhängt. Um bei guter Verwirbelung eine möglichst geringe Vibration zu erzeugen, hat sich eine Ausführungsform als optimal erwiesen, bei der der Übergangsabschnitt des Düsenrohrs gegenüber der Drehachse des Hauptabschnitts einen Winkel von ca. 160° aufweist.

Zur Erzeugung eines Drehmoments auf das Düsenrohr ist zu empfehlen, dass der Düsenabschnitt des Düsenrohrs sowohl gegenüber dem Übergangsabschnitt als auch gegenüber der Drehachse abgewinkelt ist.

Optimale Stabilität des Düsenrohrs bei gleichzeitig gutem Flüssigkeitsdurchsatz erhält man, wenn das Düsenrohr einen Außendurchmesser von ca. 5 mm und einen Innendurchmesser von ca. 3 mm aufweist.

Besonders geringe Vibrationen werden von einem Düsenrohr beim Drehen erzeugt, wenn sich die Längen von Hauptabschnitt zu Übergangsabschnitt zu Düsenabschnitt verhalten wie 68:26:7. Insbesondere in Verbindung mit den vorgenannten Durchmessern des

Düsenrohrs ergibt sich eine besonders stabile, funktionstüchtige und langlebige sowie vibrationsarme Ausführungsform, wenn die Länge des Hauptabschnitts bis zum Beginn des Knicks zum Übergangsabschnitt ca. 68 mm, die Länge des Übergangsabschnitts ca. 26 mm und die Länge vom Übergangsabschnitt zusammen mit dem Düsenabschnitt ca. 33 mm beträgt.

Die Vibration lässt sich weiter vermindern durch die Maßnahme, dass das austrittsseitige Lager auf dem Hauptabschnitt des Düsenrohrs in der näheren Umgebeung des Knicks angeordnet ist.

Die Erfindung betrifft auch eine Düsenrohrbaugruppe für pressluftbetriebene Reinigungsgeräte, deren Düsenrohr die weiter oben beschriebenen Abschnitte und Abmessungen aufweist und dessen austrittsseitiges Lager gemäß den obigen Vorgaben positioniert ist. Neben dem Düsenrohr weist die Düsenbaugruppe das genannte austrittsseitige Lager, einen Abstandhalter und ein eintrittsseitiges Lager auf, die alle auf dem Hauptabschnitt angeordnet sind und axial aneinander anliegen.

Ein Ausführungsbeispiel der Erfindung wird nachfolgend anhand der Zeichnungen näher erläutert.

Die Figuren der Zeichnung zeigen im Einzelnen:
- Figur 1:: eine teilweise geschnittene Ansicht einer erfindungsgemäßen Spritzdüsenbaugruppe einschliesslich einer erfindungsgemäßen Düsenrohrbaugruppe;
- Figur 2:: eine vergrößerte Seitenansicht eines Anschlagteils in einer abgeänderten Ausführungsform;
- Figur 3:: das Anschlagteil in einer Rückenansicht aus Richtung III von Figur 2;
- Figur 4:: das Anschlagteil in einer Vorderansicht gemäß IV von Figur 2;
- Figur 5:: eine Seitenansicht eines Düsenrohrs;
- Figur 6:: eine Ansicht des Düsenrohrs aus Richtung VI von Figur 5.

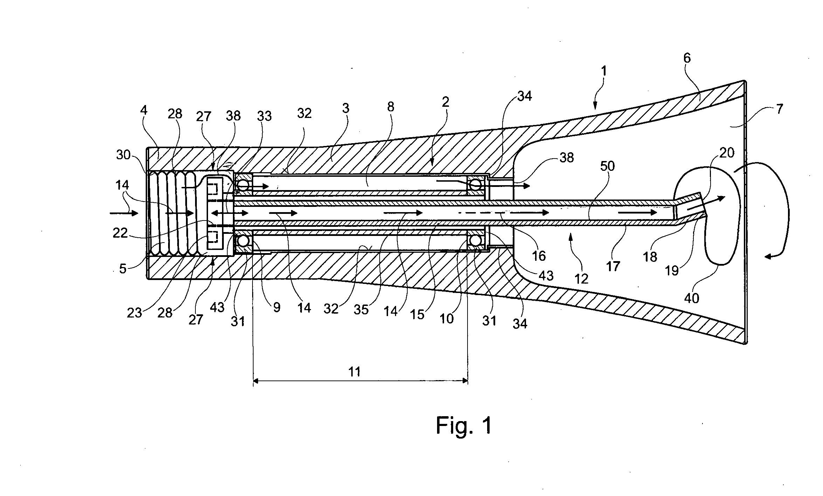

Wie man am besten in Figur 1 erkennt, besteht die erfindungsgemäße Spritzdüsenbaugruppe 1 aus einem Düsengehäuse 2, welches einen rohrförmigen Gehäuseabschnitt 3 und einen trichterförmig erweiterten Ausblasabschnitt 6 aufweist. An einem Eintrittsende 4 des rohrförmigen Gehäuseabschnitts 3 ist eine Eintrittsöffnung 5 zum Eintritt von Pressluft oder einem sonstigen Fluid vorgesehen. Der Ausblasabschnitt 6 weist eine Austrittsöffnung 7 auf, durch die das verwirbelte Fluid 54 austreten kann.

Der rohrförmige Gehäuseabschnitt 3 weist einen zylindrischen Innenraum 8 auf, an dessen Innenwand 32 ein eintrittsseitiges Lager 9 und ein austrittsseitiges Lager 10 mit ihren jeweiligen Außenringen 31 radial anliegen und in Position gehalten werden. Die Innenringe 43 der Kugellager 9, 10 sind gegenüber dem Düsengehäuse 2 drehbar und umfassen einen Hauptabschnitt 15 eines Düsenrohrs 12, welcher sich durch die beiden Kugellager 9, 10 hindurch erstreckt. Ein Abstandhalter 35 hat die Form einer Hülse, die den Hauptabschnitt 15 des Düsenrohrs 12 umschließt und an seinen beiden axialen Enden an den Innenringen 43 der Lager 9, 10 anliegt, die so im axialen Abstand 11 zueinander fixiert sind.

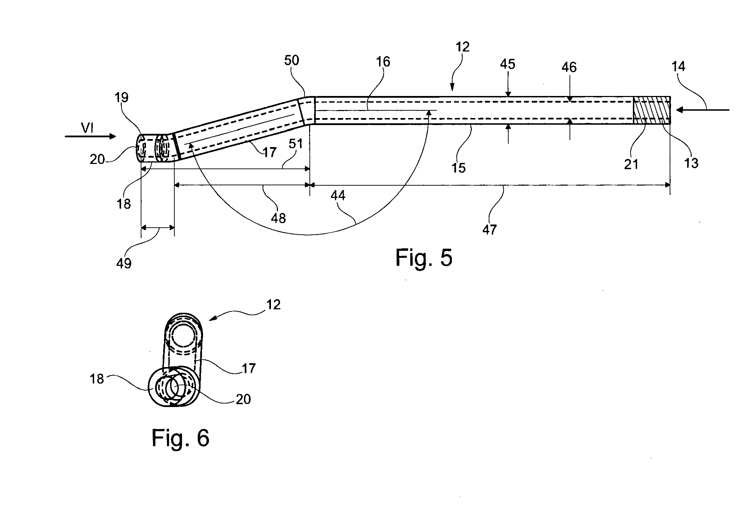

Das Düsenrohr 12 hat neben dem Hauptabschnitt 15 einen Übergangsabschnitt 17, der gegenüber dem Hauptabschnitt 15 einen Winkel 44 von 160° (siehe Figur 5) aufweist. Der Übergangsabschnitt 17 geht in einen nochmals abgewinkelten Düsenabschnitt 18 über, dessen freies Ende 19 eine Düsenöffnung 20 aufweist. Auf ein Außengewinde 21 (Figur 5) eines Eintrittsendes 13 des Düsenrohrs 12 ist ein Innengewinde 22 eines Anschlagteils 23 aufgeschraubt. Der Außendurchmesser 45 des Düsenrohrs 12 beträgt 5 mm, der Innendurchmesser 46 beträgt 3 mm.

Durch das Eintrittsende 13 tritt Fluid 14 in das Düsenrohr 12 ein und durchläuft es, bis das Fluid 14 an der Düsenöffnung 20 austritt und aufgrund des Rückstoßes das Düsenrohr 12 in eine Drehung um die Drehachse 16 versetzt. Dadurch wird das Fluid 14 zu einem verwirbelten Fluid 54, welches aus der Austrittsöffnung 7 des Düsengehäuses 2 austritt.

Die Abmessungen der verschiedenen Abschnitte 15, 17, 18 des Düsenrohrs 12 sind wichtig für einen möglichst vibrationsfreien Betrieb der Spritzdüsenbaugruppe 1. Optimal ist eine Länge 47 von 68 mm für den Hauptabschnitt 15, eine Länge 48 von 26 mm für den Übergangsabschnitt 17 und eine Länge 49 von 7 mm für den Düsenabschnitt 18. Auch bei anderen Skalierungen ist es vorteilhaft, ein Verhältnis von 68:26:33 jeweils für die Länge 47 des Hauptabschnitts 15, die Länge 48 des Übergangsabschnitts zu der Länge 51 von Übergangsabschnitt 17 und Düsenabschnitt 18 zusammen einzuhalten.

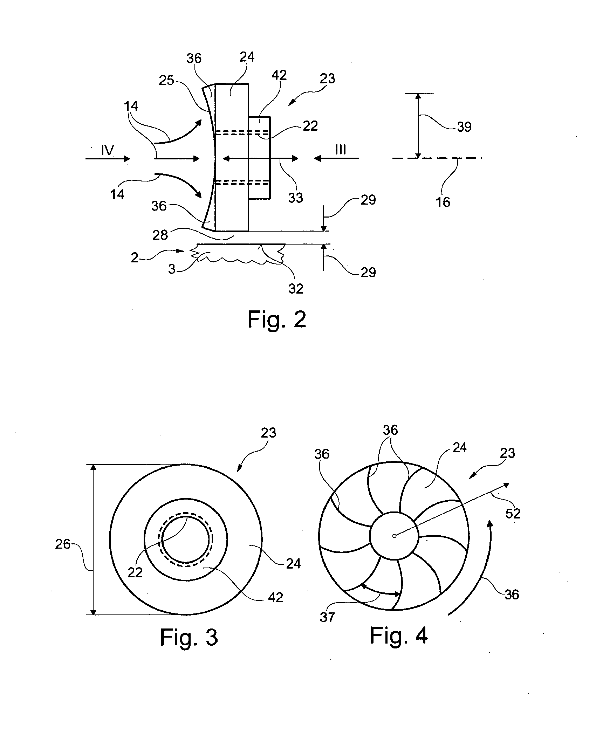

Das Anschlagteil 23 ist in den Figuren 2 bis 4 vergrößert aus verschiedenen Blickrichtungen dargestellt. Es besteht aus einem Scheibenabschnitt 24, der sich radial nach außen erstreckt und eine Eintrittsseite 25 zum Eintritt des Fluids 14 aufweist. Der Außendurchmesser 26 des Scheibenabschnitts 24 beträgt 16 mm. Damit ist er etwas kleiner als der Innendurchmesser 27 des rohrförmigen Gehäuseabschnitts 3 im Axialbereich des Anschlagteils 23. Somit verbleibt ein Ringspalt 28 zwischen dem radial äußeren Rand des Anschlagteils 23 und der Innenwand 32 des Düsengehäuses 2 mit einer Spaltbreite 29 von 2 mm (siehe auch Figur 2). Wie man am besten in Figur 1 erkennt, kann ein Nebenstrom 38 des Fluids 14 durch den Ringspalt 28 hindurchtreten und über das eintrittsseitige Lager 9 in den Innenraum 8 gelangen, von wo der Seitenstrom 38 weiter durch das austrittsseitige Lager 10 in den Bereich des Ausblasabschnitts 6 gelangt. Der Nebenstrom 38 kann dabei kleine Schmutzpartikel, die sich in den Lagern 9, 10 verfangen haben, lösen und aus den Lagern 9, 10 entfernen, so dass die Leichtgängigkeit und Lebensdauer der Lager 9, 10 verbessert wird.

Am Eintrittsende 4 des rohrförmigen Gehäuseabschnitts 3 des Düsengehäuses 2 ist ein Innengewinde 30 vorgesehen, welches zur Befestigung des Düsengehäuses 2 an einem nicht gezeigten Gewinde eines Reinigungsgerätes, welches Pressluft bzw. mit Pressluft vermischte Reinigungsflüssigkeitströpfchen oder ein sonstiges, unter Druck stehendes Fluid 14 liefert, bestimmt ist.

Der Scheibenabschnitt 24 des Anschlagteils 23 ist auf seiner Eintrittsseite 25 mit Finnen 36 versehen, die dem Fluidstrom 14 ausgesetzt sind. Wie man am besten in Figur 4 erkennt, sind die Finnen 36 auf dem Scheibenabschnitt 24 in Drehrichtung 41 in gleichen Winkelabständen 37 zueinander angeordnet und in Radialrichtung 52 spiralförmig gebogen. Wie man am besten in Figur 2 erkennt, nimmt die Ausdehnung der Finnen 36 in Axialrichtung 33 zu, wenn sich der Abstand 39 von der Drehachse 16 vergrößert.

Das Anschlagteil 23 weist außerdem einen sich in Axialrichtung 33 erstreckenden, rohrförmigen Rohrabschnitt 42 auf, der sich um das Düsenrohr 12 herum axial erstreckt und in Axialrichtung 33 am Innenring 43 des eintrittsseitigen Lagers 9 anliegt. Das Innengewinde 22 erstreckt sich durch den Scheibenabschnitt 24 und den Rohrabschnitt 42.

Das austrittsseitige Lager 10 liegt in Axialrichtung 33 an einem von der Innenwand 32 des Düsengehäuses 2 radial nach innen ragenden axialen Anschlag 34 an, der sich ringförmig im Innenraum 8 erstreckt. Wenn das Fluid 14 unter hohem Druck gegen die Eintrittsseite 25 des Scheibenabschnitts 24 des Anschlagteils 23 drückt, wird die erzeugte Kraft über die Stirnfläche des Rohrabschnitts 42 auf den Innenring 43 des eintrittsseitigen Lagers 9, von diesem weiter in Axialrichtung 33 auf den Abstandhalter 35 und vom Abstandhalter 35 auf den Innenring 43 und von diesem über die Kugeln auf den Außenring 31 des austrittsseitigen Lagers 10 übertragen, und schließlich vom axialen Anschlag des Düsengehäuses 2 aufgenommen, an dem der Außenring 31 des austrittsseitigen Kugellagers 10 axial anliegt.

Durch die Anordnung des austrittsseitigen Lagers 10 auf dem Hauptabschnitt 15 des Düsenrohrs 12 nahe dem Knick 50 zwischen dem Hauptabschnitt 15 und dem Übergangsabschnitt 17 erhält man eine relativ vibrationsarme Lagerung, wodurch die Lebensdauer des Düsenrohrs 12 und insbesondere der Lager 9, 10 verlängert wird.

Die erfindungsgemäße Spritzdüsenbaugruppe 1 kann auf einfache Weise an der Fluidversorgung des Reinigungsgerätes, insbesondere einen Pressluft-Pistolengriff mit einem Vorratsbehälter für Reinigungsflüssigkeit befestigt werden, indem das Düsengehäuse 2 mittels des Innengewindes 30 mit den anderen Geräteteilen verschraubt wird. Weitere Teile müssen nicht verbunden werden. Dadurch wird die Montage erleichtert und die Gefahr von Fehlbedienungen verringert. Selbstverständlich ist die erfindungsgemäße Spritzdüsenbaugruppe 1 auch für eine nicht gezeigte Ausführungsform geeignet, bei der die Reinigungsflüssigkeit durch einen am übrigen Geräteteil angeschlossenen dünnen Nylonschlauch zugeführt wird, der beim Anschluss der Spritzdüsenbaugruppe 1 in das Düsenrohr 12 vom Eintrittsende 13 her einzuführen ist und dessen freies Ende, an dem die Reinigungsflüssigkeit austritt, bei betriebsfertig montierter Spritzdüsenbaugruppe 1 im Bereich der Düsenöffnung 20 zu liegen kommt.

Die erfindungsgemäße Spritzdüsenbaugruppe 1 ist aber auch einfach montierbar, denn man kann eine Düsenrohrbaugruppe vormontieren und diese vormontierte Düsenbaugruppe auf einfache Weise durch die Eintrittsöffnung 5 in das Düsengehäuse einführen, bis das austrittsseitige Lager 10 am axialen Anschlag 34 des Düsengehäuses 2 anliegt und beide Lager 9, 10 in Reibeingriff mit der Innenwand 32 des Düsengehäuses 2 sind. Das Düsengehäuse 2 wird vorzugsweise als einstückiges Spritzgußteil aus Kunststoff hergestellt. Die übrigen Teile, die als Düsenbaugruppe vormontierbar sind, bestehen vorzugsweise aus Metall, insbesondere Stahl, Edelstahl, Aluminium oder einer geeigneten Legierung. Das Düsenrohr 12 kann aber auch aus einem besonders haltbaren Kunststoff oder für extrem harten Dauereinsatz aus Karbonfaser bestehen.

Auch die vorgefertigte Düsenbaugruppe kann auf sehr einfache Weise hergestellt werden, indem zunächst das Düsenrohr 12 mit einem Gewinde versehen, gebogen, dann das austrittsseitige Lager 10 in der gewünschten Axialposition aufgepresst und schließlich der Abstandhalter 35 sowie das eintrittsseitige Lager 10 aufgeschoben und schließlich das Anschlagteil 23 aufgeschraubt wird.

### BEZUGSZEICHENLISTE

- 1: Spritzdüsenbaugruppe
- 2: Düsengehäuse
- 3: rohrförmiger Gehäuseabschnitt
- 4: Eintrittsende
- 5: Eintrittsöffnung
- 6: Ausblasabschnitt
- 7: Austrittsöffnung
- 8: Innenraum
- 9: eintrittsseitiges Lager
- 10: austrittsseitiges Lager
- 11: axialer Abstand
- 12: Düsenrohr
- 13: Eintrittsende
- 14: Fluid
- 15: Hauptabschnitt
- 16: Drehachse
- 17: Übergangsabschnitt
- 18: Düsenabschnitt
- 19: freies Ende
- 20: Düsenöffnung
- 21: Außengewinde
- 22: Innengewinde
- 23: Anschlagteil
- 24: Scheibenabschnitt
- 25: Eintrittsseite
- 26: Außendurchmesser
- 27: Innendurchmesser
- 28: Ringspalt
- 29: Spaltbreite
- 30: Innengewinde
- 31: Außenringe
- 32: Innenwand
- 33: Axialrichtung
- 34: axialer Anschlag
- 35: Abstandhalter
- 36: Finne
- 37: Winkelabstände
- 38: Nebenstrom
- 39: Abstand
- 40: verwirbeltes Fluid
- 41: Drehrichtung
- 42: Rohrabschnitt
- 43: Innenring
- 44: Winkel
- 45: Außendurchmesser
- 46: Innendurchmesser
- 47: Länge des Hauptabschnitts
- 48: Länge des Übergangsabschnitts
- 49: Länge des Düsenabschnitts
- 50: Knick
- 51: Länge
- 52: Radialrichtung

## Patentansprüche

1. Spritzdüsenbaugruppe für pressluftbetriebene Reinigungsgeräte, mit einem Düsengehäuse (2), das einen im wesentlichen rohrförmigen Gehäuseabschnitt (3) aufweist, der ein am Reinigungsgerät zu befestigendes Eintrittsende (4) mit einer Eintrittsöffnung (5) aufweist und auf seiner dem Eintrittsende (4) entgegengesetzten Seite in einen vorzugsweise trichterförmig erweiterten Ausblasabschnitt (6) mit einer Austrittsöffnung (7) übergeht, wobei im Innenraum (8) des rohrförmigen Gehäuseabschnitts (3) ein eintrittsseitiges Lager (9) und ein austrittsseitiges Lager (10) im axialen Abstand (11) zueinander angeordnet sind, mit denen ein Düsenrohr (12) drehbar gelagert ist, welches ein im Bereich der Eintrittsöffnung (5) des Düsengehäuses (2) angeordnetes Eintrittsende (13) zum Eintritt von unter Druck stehendem Fluid (14), insbesondere von Pressluft oder einem Gemisch aus Pressluft und Flüssigkeitströpfchen, aufweist, wobei sich ein Hauptabschnitt (15) des Düsenrohrs (12) von dem Eintrittsende (13) ausgehend im Wesentlichen gerade durch die Lager (9, 10) hindurch erstreckt, an dem sich im Bereich des Ausblasabschnitts (6) des Düsengehäuses (2) ein gegenüber der Drehachse (16) des Düsenrohrs (12) abgewinkelter Übergangsabschnitt (17) anschließt, der seinerseits in einen Düsenabschnitt (18) übergeht, dessen freies Ende (19) eine Düsenöffnung (20) zum Austritt des Fluids (14) aufweist, wobei das Düsenrohr (12) im Bereich seines Eintrittsendes (13) mit einem Anschlagteil (23) versehen ist, welches einen im Wesentlichen scheibenringförmigen, sich radial nach außen erstreckenden Scheibenabschnitt (24) aufweist, **dadurch gekennzeichnet, dass** ein sich um das Düsenrohr (12) herum erstreckender Rohrabschnitt (42) des Anschlagteils (23) an einem Innenring (43) des eintrittsseitigen Lagers (9) axial anliegt und dass ein Nebenstrom (38) des Fluids (14) durch einen zwischen dem Scheibenabschnitt (24) und dem Düsengehäuse (2) gebildeten Ringspalt (28) hindurchtreten und über das eintrittsseitige Lager (9) in den Innenraum (8) und weiter durch das austrittsseitige Lager (10) hindurchströmen kann.

2. Spritzdüsenbaugruppe nach Anspruch 1, **dadurch gekennzeichnet, dass** der Ringspalt (28) eine Spaltbreite (29) von ca. 2 mm aufweist und dass der Außendurchmesser (26) des Scheibenabschnitts (24) etwa 16 mm beträgt.

3. Spritzdüsenbaugruppe nach einem der vorhergehenden Ansprüche, **dadurch gekennzeichnet, dass** das Düsenrohr (12) im Bereich seines Eintrittsendes (13) mit einem Außengewinde (21), vorzugsweise mit Gewindegröße M5, versehen ist, auf welches das mit einem Innengewinde (22) versehene Anschlagteil (23) aufgeschraubt ist.

4. Spritzdüsenbaugruppe nach einem der vorhergehenden Ansprüche, **dadurch gekennzeichnet, dass** das Düsengehäuse (2) an seinem Eintrittsende (4) mit einem Innengewinde (30) zur Befestigung an dem Reinigungsgerät versehen ist, vorzugsweise mit einem M18-Gewinde.

5. Spritzdüsenbaugruppe nach einem der vorhergehenden Ansprüche, **dadurch gekennzeichnet, dass** die beiden Lager (9, 10) und etwa vorhandene weitere Lager des Düsenrohrs (12) mit der Umfangsfläche ihrer radial außen liegenden Außenringe (31) an einer zylindrischen Innenwand (32) des rohrförmigen Gehäuseabschnitts (3) des Düsengehäuses (2) anliegen.

6. Spritzdüsenbaugruppe nach einem der vorhergehenden Ansprüche, **dadurch gekennzeichnet, dass** das austrittsseitige Lager (10) in Axialrichtung (33) an einem von der Innenwand (32) des Düsengehäuses (2) radial nach innen ragenden axialen Anschlag (34) des Düsengehäuses (2) anliegt, dass zwischen dem eintrittsseitigen Lager (9) und dem austrittsseitigen Lager (10) ein Abstandhalter (35) angeordnet ist, der das Düsenrohr (12) umschließt, und dass das Anschlagteil (23) durch das unter Druck stehende Fluid (14) in Axialrichtung (33) gegen das eintrittsseitige Lager (9) drückt, wobei die Andruckkraft über den Abstandhalter (35) und das austrittsseitige Lager (10) am axialen Anschlag (34) des Düsengehäuses (2) abgestützt wird.

7. Spritzdüsenbaugruppe nach einem der vorhergehenden Ansprüche, **dadurch gekennzeichnet, dass** das Anschlagteil (23) mit Finnen (36) versehen ist, die auf der der Eintrittsöffnung (5) des Düsengehäuses (2) zugewandten Seite des Scheibenabschnitts (24) im Fluidstrom angeordnet sind und dass die Ausdehnung der Finnen (36) in Axialrichtung (33) mit zunehmendem Abstand von der Drehachse (16) zunimmt.

8. Spritzdüsenbaugruppe nach Anspruch 7, **dadurch gekennzeichnet, dass** die Finnen (36) auf dem Scheibenabschnitt (24) in Drehrichtung (41) gleiche Winkelabstände (37) zueinander aufweisen, dass die Finnen (36) in Radialrichtung (52) spiralförmig ausgestaltet sind.

9. Spritzdüsenbaugruppe nach einem der vorhergehenden Ansprüche, **dadurch gekennzeichnet, dass** der Übergangsabschnitt (17) des Düsenrohrs (12) gegenüber der Drehachse (16) des Hauptabschnitts (15) einen Winkel (44) von ca. 160° aufweist und dass der Düsenabschnitt (18) des Düsenrohrs (12) sowohl gegenüber dem Übergangsabschnitt (17) als auch gegenüber der Drehachse (16) abgewinkelt ist.

10. Spritzdüsenbaugruppe nach einem der vorhergehenden Ansprüche, **dadurch gekennzeichnet, dass** das Düsenrohr (12) einen Außendurchmesser (45) von ca. 5 mm und einen Innendurchmesser (6) von ca. 3 mm aufweist.

11. Spritzdüsenbaugruppe nach Anspruch 9, **dadurch gekennzeichnet, dass** sich die Längen (47, 48, 49) von Hauptabschnitt (15) zu Übergangsabschnitt (17) zu Düsenabschnitt (18) des Düsenrohrs (12) verhalten wie 68 (47) zu 26 (48) zu 7 (49).

12. Spritzdüsenbaugruppe nach Anspruch 11, **dadurch gekennzeichnet, dass** die Länge (47) des Hauptabschnitts (15) bis zum Beginn des Knicks (50) zum Übergangsabschnitt (17) ca. 68 mm, die Länge (48) des Übergangsabschnitts (17) ca. 26 mm und die Länge (51) vom Übergangsabschnitt (17) zusammen mit dem Düsenabschnitt (18) ca. 33 mm beträgt und dass das austrittsseitige Lager (10) auf dem Hauptabschnitt (15) des Düsenrohrs (12) in der näheren Umgebung des Knicks (50) angeordnet ist.

## Claims

1. Atomizing nozzle assembly for pneumatically operated cleaning equipment with a nozzle body (2) comprising a basically tubular housing section (3) with an inlet end (4) with inlet opening (5) to be fastened to the cleaning equipment, ending into a preferably funnel-shaped extension with an outlet section (6) and outlet opening (7) at the opposite side, with a bearing each at the inlet (9) and outlet side (10) at an axial offset (11) to each other for a rotating nozzle pipe (12) having an inlet end (13) where pressurized fluid (14), in particular compressed air or a mixture of compressed air and fluid droplets, can enter; a main section (15) of the nozzle pipe (12) starting from the inlet end (13) and basically reaching through the bearings (9, 10) in a straight manner followed, in the area of the exit section (6) of the nozzle housing (2), by an transitory section (17) angled in relation to the axis of rotation (12) of the nozzle pipe (12), which leads into a nozzle section (18) whose free end (19) features a nozzle opening (20) from which the fluid (14) exits, with the nozzle pipe (12) having a stop element (23) in the area of its inlet end (13) basically having an annular disc section (24) radially protruding to the outside, **characterized in that** the pipe section (42) around the nozzle pipe (12) of the stop element (23) axially touches an inner ring (43) of the bearing at the inlet side (9) and that a secondary flow path (38) of the fluid (14) can flow through an annular gap (28) formed between the disc section (24) and the nozzle housing (2) and via the bearing at the inlet side (9) into the inner space (8) and further through the bearing at the outlet side (10).

2. Atomizing nozzle assembly according to claim 1, **characterized in that** the annular gap (28) features a gap width (29) of approx. 2 mm and that the outer diameter (26) of the disc section (24) is approx. 16 mm.

3. Atomizing nozzle assembly according to one of the above claims, **characterized in that** the nozzle pipe (12) in the area of its inlet end (13) features a male thread (21), preferably M5, to which the stop element (23) with female thread (22)is screwed.

4. Atomizing nozzle assembly according to one of the above claims, **characterized in that** the nozzle housing (2) features at its inlet side (4) a female thread (30) for fastening to a cleaning equipment, preferably with an M18 thread.

5. Atomizing nozzle assembly according to one of the above claims, **characterized in that** the peripheral surface of the radial outer races of (31) both bearings (9, 10) and any other bearings of the nozzle pipe (12) have contact with a cylindrical inner wall (32) of the tubular housing section (3) of the nozzle housing (2).

6. Atomizing nozzle assembly according to one of the above claims, **characterized in that** the outlet side bearing (10) makes radial contact with an axial shoulder (34) radially protruding into the inner wall (32) of the nozzle housing (2), a spacer (35) enclosing the nozzle pipe (12) is arranged between inlet side bearing (9) and outlet side bearing (10), the pressurized fluid (14) forces the stop element (23) against the inlet side bearing (9) in axial direction (33) while the pressing force is supported by the spacer (35) and the outlet side bearing (10) by the axial shoulder (34) of the nozzle housing (2).

7. Atomizing nozzle assembly according to one of the previous claims, **characterized in that** the stop element (23) features blades (36) arranged in the fluid flow path on the side of the disc (24) facing the inlet orifice (5) of the nozzle housing (2), and that the expansion of blades (36) increases in axial direction (33) with increasing distance from the axis of rotation (16).

8. Atomizing nozzle assembly according to Claim 7, **characterized in that** the blades (36) on the disc section (24) are arranged in the direction of rotation (41) at identical angular distances (37) to each other and that the blades (36) have a spiral shape in radial direction (52).

9. Atomizing nozzle assembly according to one of the above claims, **characterized in that** the transitory section (17) of the nozzle pipe (12) in relation to the axis of rotation (16) of the main section (15) features an angle (44) of approx. 160° and that the nozzle section (18) of the nozzle pipe (12) is angled in relation to the transitory section (17) and also to the axis of rotation (16).

10. Atomizing nozzle assembly according to one of the above claims, **characterized in that** the nozzle pipe (12) features an outer diameter (45) of approx. 5 mm and an inner diameter (6) of approx. 3 mm.

11. Atomizing nozzle assembly according to claim 9, **characterized in that** the lengths (47, 48, 49) of main section (15) to transitory section (17) to the nozzle section (18) of nozzle pipe (12) have a ratio of 68 (47) to 26 (48) to 7 (49).

12. Atomizing nozzle assembly according to claim 11, **characterized in that** length (47) of main section (15) up to the beginning of the bend (50) to transitory section (17) is approx. 68 mm, length (48) of transitory section (17) is approx. 26 mm, and length (51) from transitory section (17) together with nozzle section (18) is approx. 33 mm and the outlet side bearing (10) on main section (15) of the nozzle section (12) is located near the bend (50).

## Revendications

1. Ensemble buse de pulvérisation pour appareils de nettoyage à air comprimé, comprenant un boîtier de buse (2), qui présente une section de boîtier (3) essentiellement tubulaire, laquelle section de boîtier présente une extrémité d'entrée (4) devant être fixée au niveau de l'appareil de nettoyage et dotée d'un orifice d'entrée (5) et qui, sur son côté opposé à l'extrémité d'entrée (4), devient une section de soufflage (6) s'élargissant de préférence de manière à présenter une forme d'entonnoir et dotée d'un orifice de sortie (7), sachant que sont disposés dans l'espace intérieur (8) de la section de boîtier (3) tubulaire, un palier côté entrée (9) et un palier côté sortie (10) à distance (11) axiale l'un de l'autre, à l'aide desquels une lance (12) est logée de manière à pouvoir tourner, ladite lance présentant une extrémité d'entrée (13) disposée dans la zone de l'orifice d'entrée (5) du boîtier de buse (2) et servant à l'entrée du fluide (14) sous pression, en particulier de l'air comprimé ou d'un mélange d'air comprimé et de gouttelettes de liquide, sachant qu'une section principale (15) de la lance (12) s'étend en partant de l'extrémité d'entrée (13) essentiellement de manière rectiligne à travers les paliers (9, 10), à laquelle section principale se raccorde, dans la zone de la section de soufflage (6) du boîtier de buse (2), une section de transition (17) inclinée par rapport à l'axe de rotation (16) de la lance (12), ladite section de transition devenant, de son côté, une section à buses (18) dont l'extrémité libre (19) présente un orifice de buse (20) servant à la sortie du fluide (14), sachant que la lance (12) est pourvue dans la zone de son extrémité d'entrée (13) d'une partie de butée (23), qui présente une section de disque (24) présentant essentiellement une forme de bague de disque, s'étendant radialement vers l'extérieur, **caractérisé en ce qu'**une section tubulaire (42), s'étendant tout autour de la lance (12), de la partie de butée (23) repose de manière axiale au niveau d'une bague intérieure (43) du palier côté entrée (9), et **en ce qu'**un flux secondaire (38) du fluide (14) peut traverser une fente annulaire (28) formée entre la section de disque (24) et le boîtier de buse (2) et peut s'écouler en passant par le palier côté entrée (9) dans l'espace intérieur (8) puis à travers le palier côté sortie (10).

2. Ensemble buse de pulvérisation selon la revendication 1, **caractérisé en ce que** la fente annulaire (28) présente une largeur de fente (29) d'environ 2 mm, et **en ce que** le diamètre extérieur (26) de la section de disque (24) est d'environ 16 mm.

3. Ensemble buse de pulvérisation selon l'une quelconque des revendications précédentes, **caractérisé en ce que** la lance (12) est pourvue dans la zone de son extrémité d'entrée (13) d'un filetage extérieur (21), de préférence d'un filetage de taille M5, sur lequel est vissée la partie de butée (23) pourvue d'un filetage intérieur (22).

4. Ensemble buse de pulvérisation selon l'une quelconque des revendications précédentes, **caractérisé en ce que** le boîtier de buse (2) est pourvu, au niveau de son extrémité d'entrée (4), d'un filetage intérieur (30) servant à la fixation au niveau de l'appareil de nettoyage, de préférence pourvu d'un filetage M18.

5. Ensemble buse de pulvérisation selon l'une quelconque des revendications précédentes, **caractérisé en ce que** les deux paliers (9, 10) et d'autres paliers éventuellement présents de la lance (12) reposent, par la surface périphérique de leurs bagues extérieures (31) situées radialement à l'extérieur, au niveau d'une paroi intérieure (32) cylindrique de la section de boîtier (3) tubulaire du boîtier de buse (2).

6. Ensemble buse de pulvérisation selon l'une quelconque des revendications précédentes, **caractérisé en ce que** le palier côté sortie (10) repose dans la direction axiale (33) au niveau d'une butée (34) axiale, dépassant de la paroi intérieure (32) du boîtier de buse (2) radialement vers l'intérieur, du boîtier de buse (2), **en ce qu'**un écarteur (35) est disposé entre le palier côté entrée (9) et le palier côté sortie (10), lequel écarteur entoure la lance (12), et **en ce que** la partie de butée (23) exerce une pression contre le palier côté entrée (9) dans la direction axiale (33) sous l'effet du fluide sous pression (14), sachant que la force de compression est soutenue au niveau de la butée (34) axiale du boîtier de buse (2) par l'intermédiaire de l'écarteur (35) et du palier côté sortie (10).

7. Ensemble buse de pulvérisation selon l'une quelconque des revendications précédentes, **caractérisé en ce que** la partie de butée (23) est pourvue de pannes (36), qui sont disposées dans le flux de fluide, sur le côté, tourné vers l'orifice d'entrée (5) du boîtier de buse (2), de la section de disque (24), et **en ce que** l'extension des pannes (36) augmente dans la direction axiale (33) au fur et à mesure qu'augmente la distance de l'axe de rotation (16).

8. Ensemble buse de pulvérisation selon la revendication 7, **caractérisé en ce que** les pannes (36) présentent les unes par rapport aux autres sur la section de disque (24) dans la direction de rotation (41) les mêmes distances angulaires (37), **en ce que** les pannes (36) sont réalisées dans la direction radiale (52) de manière à présenter une forme de spirale.

9. Ensemble buse de pulvérisation selon l'une quelconque des revendications précédentes, **caractérisé en ce que** la section de transition (17) de la lance (12) présente un angle (44) d'environ 160° par rapport à l'axe de rotation (16) de la section principale (15), et **en ce que** la section à buses (18) de la lance (12) est inclinée aussi bien par rapport à la section de transition (17) que par rapport à l'axe de rotation (16).

10. Ensemble buse de pulvérisation selon l'une quelconque des revendications précédentes, **caractérisé en ce que** la lance (12) présente un diamètre extérieur (45) d'environ 5 mm et un diamètre intérieur (6) d'environ 3 mm.

11. Ensemble buse de pulvérisation selon la revendication 9, **caractérisé en ce que** les longueurs (47, 48, 49) de la section principale (15) à la section de transition (17) à la section à buses (18) de la lance (12) se comportent comme 68 (47) par rapport à 26 (48) par rapport à 7 (49).

12. Ensemble buse de pulvérisation selon la revendication 11, **caractérisé en ce que** la longueur (47) de la section principale (15) jusqu'au début du pli (50) à la section de transition (17) est d'environ 68 mm, la longueur (48) de la section de transition (17) est d'environ 26 mm et la longueur (51) de la section de transition (17) conjointement avec la section à buses (18) est d'environ 33 mm, et **en ce que** le palier côté sortie (10) est disposé sur la section principale (15) de la lance (12) dans l'environnement le plus proche du pli (50).
